# EUROPÄISCHE PATENTSCHRIFT

(11) **EP 1 157 314 B1**
(45) Veröffentlichungstag und Bekanntmachung des Hinweises auf die Patenterteilung: **22.09.2004**
(21) Anmeldenummer: 00915135.8
(22) Anmeldetag: 02.03.2000
(51) Int. Cl.: G05B 19/409, G05B 19/418, G05B 23/02

(54) **NUTZUNG VON AUGMENTED REALITY-BASISTECHNOLOGIEN ZUR SITUATIONSGERECHTEN UNTERSTÜTZUNG DES FACHARBEITERS DURCH ENTFERNTE EXPERTEN**
USE OF AUGMENTED REALITY FUNDAMENTAL TECHNOLOGY FOR THE SITUATION-SPECIFIC ASSISTANCE OF A SKILLED WORKER VIA REMOTE EXPERTS
EXPLOITATION DE TECHNOLOGIES FONDEE SUR LA REALITE AMPLIFIEE POUR L'ASSISTANCE PAR DES EXPERTS ELOIGNES CONFORME A LA SITUATION DU TRAVAILLEUR SPECIALISE

(30) Priorität: 02.03.1999 DE 19909154; 02.03.1999 DE 19909023; 02.03.1999 DE 19909018; 02.03.1999 DE 19909012; 02.03.1999 DE 19909011; 02.03.1999 DE 19909010; 02.03.1999 DE 19909013; 02.03.1999 DE 19909009; 02.03.1999 DE 19909016
(43) Veröffentlichungstag der Anmeldung: 28.11.2001
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: PCT/DE2000/000659
(87) Internationale Veröffentlichungsnummer: WO 2000/052537

(56) Entgegenhaltungen:
- EP-A- 0 145 683
- EP-A- 0 597 127
- DE-A- 4 119 803
- DE-A- 4 127 809
- GB-A- 2 284 074
- GB-A- 2 327 289
- US-A- 5 712 649
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 1992, Seiten 533-540, XP000426833

## Beschreibung

Die Erfindung betrifft ein Augmented-Reality-System bzw. verfahren zur Übertragung von ersten Informationsdaten von einem Anwender, beispielsweise einem Facharbeiter an.einem ersten Ort an einen entfernten Experten an einen zweiten Ort.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

In dem Fachartikel Daude R. et al: "Head-Mounted Display als facharbeiterorientierte Unterstützungskomponente an CNC-Werkzeugmaschinen", Werkstattstechnik, DE, Springer Verlag, Berlin, Bd. 86, Nr. 5, 1. Mai 1996, Seiten 248-252, XP000585192 ISSN: 0340-4544, wird mit dem Head-Mounted Display (HMD) eine Komponente zur Unterstützung des Facharbeiters beim Einrichten, Einfahren und Störungsmanagement bei der Fräsbearbeitung beschrieben. Die technische Anbindung des HMD an eine moderne NC-Steuerung wird erläutert und die Ergebnisse eines Laborversuchs mit dem HMD werden genannt.

Der Erfindung liegt die Aufgabe zugrunde, ein System und ein Verfahren anzugeben, das in konkreten Arbeitssituationen auf einfache und kostengünstige weise einen schnellen und sicheren Zugriff auf Expertenwissen ermöglicht.

Diese Aufgabe wird durch ein System sowie durch ein Verfahren mit den in den Ansprüchen 1 bzw. 5 angegebenen Merkmalen gelöst.

Der Erfindung liegt die Erkenntnis zugrunde, daß heutige Werkzeug- und/oder Produktionsmaschinen einen eine erhöhte Komplexität aufweist, die in vielen Fällen, beispielsweise bei Service und Reparatur den Einsatz eines Spezialisten, oftmals des Experten beispielsweise der Herstellerfirma, erfordern. Dies führt dazu, daß der Experte zum Einsatzort reisen muß und daß für eine erhöhte Einsetzbarkeit mehrere Experten ausgebildet werden müssen. Die technische Lösung zur Entschärfung dieser Problematik besteht nun darin, daß die ersten Informationsdaten, d.h. alle Informationen, die zur Erledigung einer einen Experten erfordernden Aufgabe erforderlich sind, am ersten Ort von eine Anwender, beispielsweise einem Facharbeiter mit Hilfe von Augmented-Reality-Mitteln an einen Experten an einem entfernten zweiten Ort On-Line übertragen werden. Der Experte ist hierdurch praktisch virtuell in das Geschehen am Einsatzort eingebunden und kann wiederum mit Hilfe des Augmented-Reality-Systems dem Facharbeiter vor Ort sein Wissen in Form von an ihn übertragener zweiter Informationsdaten übermitteln. Hierdurch entsteht eine synchrone Präsenz von service-relevanten Daten beim Facharbeiter und beim spezialisierten Experten, der zentral, beispielsweise am Ort der Herstellerfirma, tätig ist.

Bei den Informations- und/oder Dokumentationsdaten kann es sich beispielsweise um bei der Errichtung einer Anlage, eines automatisierungstechnisch gesteuerten Systems oder Prozesses erstellte und gesammelte Daten und/oder auch im Betrieb einer Anlage oder eines Automatisierungssystems nach vorgebbaren Kriterien gepflegte und jeweils aktualisierte Dokumentationsdaten handeln. Diese Dokumentationsdaten können auf Speichermittel gespeichert sein, die sowohl lokal, d.h. am Ort der jeweiligen Anwendung oder auch an jedem beliebig anderen Ort, beispielsweise am Ort der jeweiligen Herstellerfirmen der einzelnen Anlagenkomponenten, gespeichert werden. Mit Hilfe der Erfassungsmittel werden beispielsweise aus einem Bildinhalt die realen Informationen erfaßt und über die Auswertemittel ausgewertet, so daß eine Zuordnung der realen Objekte zu in den Dokumentationsdaten gespeicherten Objektdaten möglich wird. Anhand der realen Informationsdaten, beispielsweise in Form eines detektierten Objekts werden dann insbesondere automatisch die zusätzlichen in dem Dokumentationsdaten enthaltenen Objektdaten ausgewählt und beispielsweise für Servicezwecke vor Ort zur Verfügung gestellt. Hierdurch wird ein situationsgerechter schneller Zugang zu den jeweils benötigten Daten ermöglicht.

Vorteilhafte Ausgestaltungen bestehen darin, daß die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozeßwerte wie Temperatur, Druck, Signale etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Augmented-Reality-Systems,
- FIG 2: ein weiteres Blockschaltbild eines Ausführungsbeispiels eines Augmented-Reality-Systems und
- FIG 3: ein Anwendungsbeispiel für einen situationsgerechten Zugriff auf Expertenwissen und/oder Dokumentationsdaten.

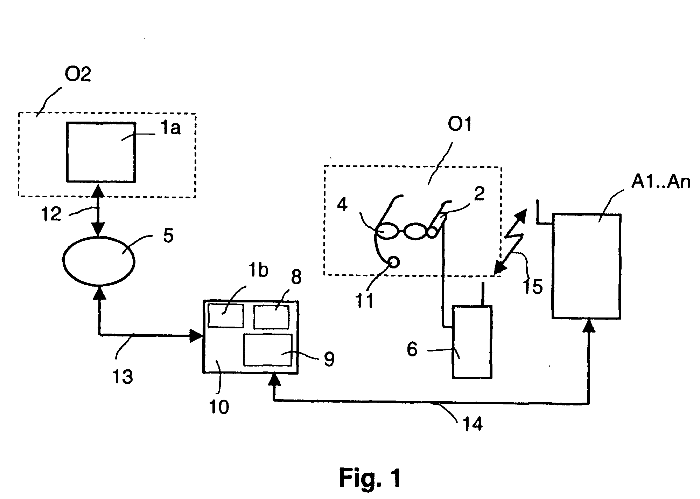

Figur 1 zeigt eine Prinzipdarstellung eines Augmented-Reality-Systems zur Übertragung von ersten Informationsdaten von einem ersten Ort O1 an einen entfernten zweiten Ort O2 eines Experten für eine Unterstützung eines Anwenders am ersten Ort O1 beispielsweise im Service- und/oder Reparaturfall durch den entfernten Experten am zweiten Ort. Der Anwender, der in Figur 1 nicht explizit dargestellt ist, ist mit mobilen Geräten 4, 6 ausgestattet. Die mobilen Geräte 4, 6 beinhalten eine Datenbrille 4, an der eine Videokamera 2 sowie ein Mikrofon 11 angeordnet ist. Die Datenbrille ist mit einer Einrichtung zur drahtlosen Kommunikation, beispielsweise einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung bzw. zum Zugriff von bzw. auf Informationsdaten, ein AR-Basismodul 8 sowie ein AR-Anwendungsmodul 9. Das AR-System 10 ist über eine Datenverbindung 13 mit dem Internet 5 verbindbar, wobei über eine beispielhaft dargestellte Internetverbindung 12 ein Zugriff auf weitere Speicher- und Dokumentationsdaten 1a möglich ist.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlagen A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Inforamtionsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Handheld-PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

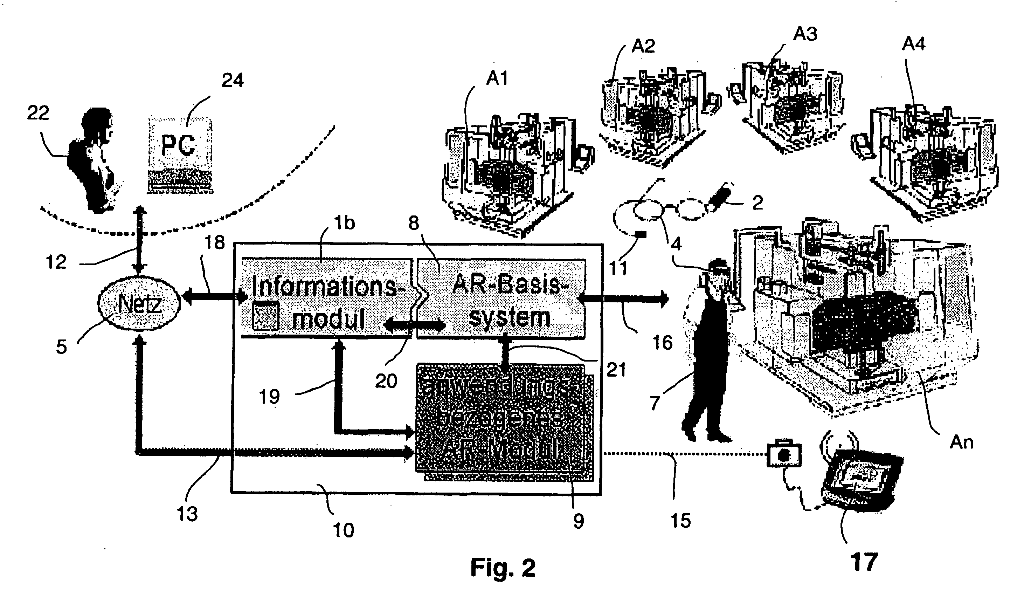

Figur 2 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Serviceoder Wartungsarbeiten durchführen.

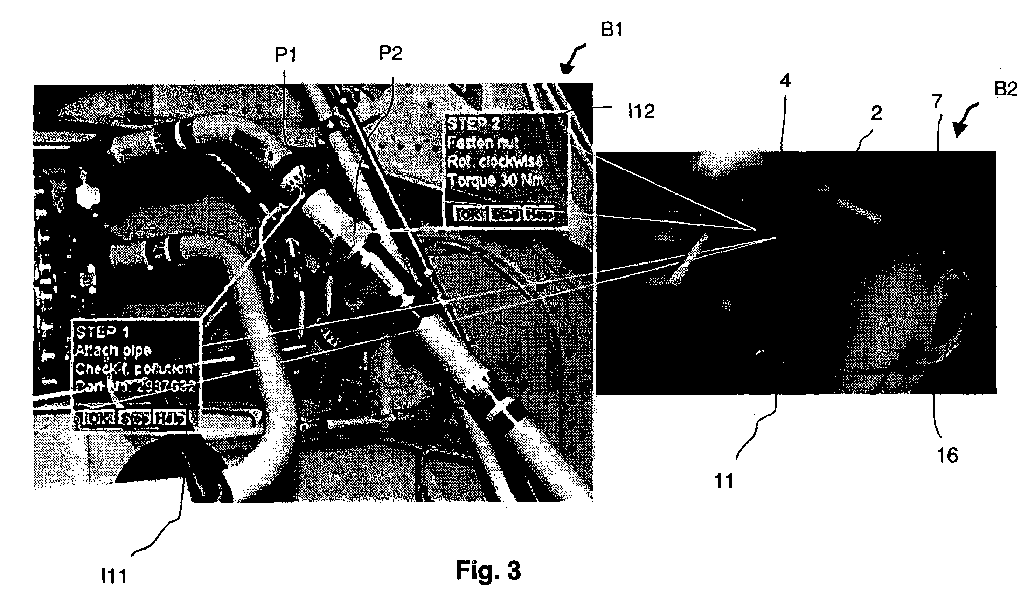

Mit Hilfe der Datenbrille 4 und der entsprechenden Funk-Sende-Empfangsvorrichtungen, beispielsweise der Funk-Sende-Empfangsvorrichtung 17, die vom Personal direkt am Körper getragen wird, ist es möglich vorbeugende Funktionalität zu erreichen: Zunächst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

Figur 3 zeigt ein Anwendungsbeispiel für einen situationsgerechten Zugriff auf Dokumentationsdaten. Figur 3 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Datenbrille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird.

Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen ARgestützt zu kooperieren.

Augmented Reality wird erst seit wenigen Jahren intensiv erforscht. Deshalb finden sich sowohl auf nationaler als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

Als technische Problem stellts ich dabei eine AR-basierte Interaktion zwischen "Remote-Experten", Werker vor Ort und System. Die Komplexität heutiger Werkzeug- und Produktionsmaschinen erfordert, in vielen Fällen den zusätzlichen Einsatz eines Spezialisten, oft des Experten des Unternehmens, das die Maschine geliefert hat.

Bei bisherigen Lösungen muß der Experte zum Einsatzort reisen. Für eine erhöhte Verfügbarkeit müssen mehrere Experten ausgebildet sein und bereitgestellt werden. Unterstützt durch AR-Technologien, stehen nicht nur dem Werker vor Ort, sondern, beispielsweise über eine eingebaute Videokamera (montiert an der Datenbrille), auch dem Experten am Heimatort der Lieferfirma alle realen und virtuellen Informationen zur Verfügung. Der entfernte Experte wird "live" in die Problemlösungsunterstützung eingebunden und ist in der Lage, dem Personal vor Ort - wiederum durch AR-basierte Technologien - zusätzliche Hinweise zu geben.

Den kleinen und mittelständischen Unternehmen ist kaum möglich an allen Fertigungsstandorten z.B. der Automobilindustrie, die notwendigen Fachexperten verfügbar zu halten. AR versetzt diese, für uns in Deutschland so wichtigen Unternehmen in die Lage, im Konzert der "Global Player" mitzuspielen. Worin liegt der erfinderische Schritt?

Synchrone Präsenz von service-relevanten Daten beim Werker (vor Ort, der Kundenanlage ... irgendwo in der Welt) und dem spezialisierten Experten (zentral am Sitz der Lieferfirma, beispielsweise in Deutschland). Besondere Bedeutung liegt z.B. darin, dem entfernten Experten aktuelle Prozeßdaten verfügbar zu machen oder umgekehrt den Werker vor Ort mit der Übermittlung von Kennwerten/Kurven zu unterstützen, die auf umfangreichen Meßergebnissen basieren und somit nicht am Einsatzort hätten erarbeitet werden können.

Zusammenfassend betrifft die Erfindung somit System und ein Verfahren zur Nutzung von Expertenwissen an einem entfernten Ort, bei dem von einem ersten Ort mit einem Facharbeiter mittels Augmented Reality-Mitteln an einen entfernten Experten an einem zweiten Ort Informationsdaten, beispielsweise in Form von Videobildern übermittelt werden und bei dem der entfernte Experte an den Facharbeiter am ersten Ort zusätzliche Informationsdaten in Form von Augmented Reality-Informationen übermittelt.

## Patentansprüche

1. Augmented-Reality-System zur Übertragung von ersten Informationsdaten von einem Anwender (7) an einem ersten Ort (O1) an einen entfernten Experten (22) an einem zweiten Ort (02),
- wobei das Augmented-Reality-System zur virtuellen Einbindung des Experten (22) in das Geschehen am ersten Ort (O1) vorgesehen ist,
- wobei die ersten Informationsdaten Prozesswerte, Videobilder und/oder Sprachsignale des Anwenders (7) sind
- und wobei vom entfernten Experten (22) am zweiten Ort (O2) an den Anwender (7) am ersten Ort (O1) zweite Informationsdaten (I11, I12) in Form von Augmented-Reality-Informationen übermittelt werden,
- wobei das System Erfassungsmittel (2, 11) mit einer Sensorik zur Erfassung der ersten Informationsdaten sowie Visualisierungsmittel (4) zur Visualisierung der zweiten Informationsdaten aufweist,
- wobei das System Auswertemittel zur Auswertung der ersten Informationsdaten und zur Zuordnung realer Objekte zu gespeicherten Objektdaten aufweist
und wobei die zugeordneten Objektdaten automatisch, insbesondere für Servicezwecke vor Ort, zur Verfügung gestellt werden.

2. System nach Anspruch 1,
**dadurch gekennzeichnet,**
**dass** die Informationsdaten statische und dynamische Informationsdaten sind.

3. System nach einem der Ansprüche 1 oder 2,
**dadurch gekennzeichnet,**
**dass** die Erfassungsmittel (2) anwendergesteuert sind.

4. System nach einem der Ansprüche 1 bis 3,
**dadurch gekennzeichnet,**
**dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

5. Verfahren zur Übertragung von ersten Informationsdaten mittels eines Augmented-Reality Systems von einem Anwender (7) an einem ersten Ort (O1) an einen entfernten Experten (22) an einem zweiten Ort (O2),
- wobei der Experte (22) mit Hilfe des Augmented-Reality-Systems virtuell in das Geschehen am ersten Ort (01) eingebunden ist,
- wobei die Informationsdaten Prozesswerte, Signalwerte, Videobilder und/oder Sprachsignale des Anwenders (7) sind
- wobei vom entfernten Experten (22) am zweiten Ort (O2) an den Anwender (7) am ersten Ort (O1) zweite Informationsdaten (I11, I12) in Form von Augmented-Reality-Informationen übermittelt werden
- wobei die ersten Informationsdaten mittels Erfassungsmitteln (2, 11) mit einer Sensorik, insbesondere einer Bildaufnahmevorrichtung erfasst und wobei die zweiten Informationsdaten mittels Visualisierungsmitteln (4) dem Anwender (7) visualisiert werden
- wobei die ersten Informationsdaten ausgewertet und gespeicherte Objektdaten realen Objekten zugeordnet werden
- und wobei die zugeordneten Objektdaten automatisch, insbesondere für Servicezwecke vor Ort, zur Verfügung gestellt werden.

6. Verfahren nach Anspruch 5,
**dadurch gekennzeichnet,**
**dass** die Informationsdaten (I1..In) statische und dynamische Informationsdaten sind.

7. Verfahren nach einem der Ansprüche 5 oder 6,
**dadurch gekennzeichnet,**
**dass** die Erfassungsmittel (2) anwendergesteuert und als sprachgesteuerte Erfassungsmittel oder durch Steuerdaten gesteuerte Erfassungsmittel ausgebildet sind.

8. Verfahren nach einem der Ansprüche 5 bis 7,
**dadurch gekennzeichnet,**
**dass** die zweiten Informationsdaten durch die Visualisierungsmittel (4) als im Bereich einer Datenbrille angeordnete Anzeigevorrichtungen dargestellt, dass die ersten Informationsdaten durch eine an der Datenbrille angeordnete Bilderfassungsvorrichtung erfasst und dass die Sprachkommandos durch ein an der Datenbrille angeordnetes Mikrofon erfasst werden.

## Claims

1. Augmented reality system for transmitting first information data from a user (7) at a first location (01) to a remote expert (22) at a second location (02),
- in which the augmented reality system is provided for virtual inclusion of the expert (22) into the activities at the first location (01)
- in which the information data is process values, video images and/or speech signals of the user (7)
- and in which additional information data (I11, I12) in the form of augmented-reality information are transmitted from the remote expert (22) at the second location (02) to the user (7) at the first location (01).
- in which the system features acquisition means (2, 11) with a sensor system for acquiring the first information data as well as visualization means (4) for visualizing the second information data
- in which the system features evaluation means for evaluating the first information data and for assigning real objects to stored object data
and in which the assigned object data is made available automatically, especially for service purposes in-situ.

2. System according to Claim 1,
**characterized in that**
the information data is static and dynamic information data.

3. System according to Claim 1 or 2,
**characterized in that**
the acquisition means (2) are user-controlled.

4. System according to Claim 1 to 3,
**characterized in that**
the visualization means (4) are designed as display devices arranged in the vicinity of eyepieces of data goggles, the acquisition means (2) provided is an image acquisition device arranged on the data goggles, and a microphone (11) arranged on the data goggles is provided to capture speech commands.

5. A method of transmitting first information data by means of an augmented-reality system from a user (7),for example a skilled operator at a first location (01) to a remote expert (22) at a second location (02)
- in which the expert (22) is included virtually with the aid of the augmented reality system into the activities at the first location (01),
- in which the information data is process values, video images and/or speech signals of the user (7)
- in which second information data (I11, I12) in the form of augmented-reality information is transmitted from the remote expert (22) at the second location (02) to the user at the first location (01)
- in which the first information data is acquired by acquisition means (2, 11) equipped with a sensor system, in particular an image recording system and in which the second information data is visualized to the user (7) using visualization means (4)
- in which the first information data is evaluated and stored object data is assigned to real objects
- and in which the assigned object data is made available automatically, especially for service purposes in-situ.

6. Method according to Claim 5,
**characterized in that**
the information data (I1..In) is static and dynamic information data.

7. Method according to Claim 5 or 6
**characterized in that**
the acquisition means (2) are user-controlled and are embodied and speech-controlled acquisition means or acquisition means controlled by control data.

8. Method according to one of the Claims 5 to 7
**characterized in that**
the second information data is displayed by the visualization means (4) arranged as display devices in the vicinity of eyepieces of data goggles, the first information data is acquired by a data acquisition device arranged on the data goggles and the speech commands are captured by a microphone arranged on the data goggles.

## Revendications

1. Système à réalité amplifiée pour la transmission de premières données informationnelles d'un utilisateur (7) se trouvant dans un premier lieu (O1) à un expert distant (22) se trouvant dans un deuxième lieu (O2), dans lequel
- le système à réalité amplifiée est prévu pour introduire virtuellement l'expert (22) dans les événements se déroulant dans le premier lieu (O1),
- les premières données informationnelles sont des valeurs de processus, des images vidéo et/ou des signaux vocaux de l'utilisateur (7),
- l'expert distant (22) se trouvant dans le deuxième lieu (O2) transmet à l'utilisateur (7) se trouvant dans le premier lieu (O1) des deuxièmes données informationnelles (I11, I12) sous la forme d'informations à réalité amplifiée,
- le système comporte des moyens d'acquisition (2, 11) ayant un système de capteurs pour l'acquisition des premières données informationnelles ainsi que des moyens de visualisation (4) pour la visualisation des deuxièmes données informationnelles,
- le système comporte des moyens d'évaluation pour l'évaluation des premières données informationnelles et pour l'association d'objets réels à des données d'objet mémorisées
- et les données d'objet associées sont automatiquement mises à disposition, en particulier à des fins de maintenance sur place.

2. Système selon la revendication 1,
**caractérisé par le fait que** les données informationnelles sont des données informationnelles statiques et dynamiques.

3. Système selon l'une des revendications 1 ou 2,
**caractérisé par le fait que** les moyens d'acquisition (2) sont commandés par l'utilisateur.

4. Système selon l'une des revendications 1 à 3,
**caractérisé par le fait que** les moyens de visualisation (4) sont conçus comme des dispositifs d'affichage placés dans la zone des verres de lunettes de données, qu'un dispositif d'enregistrement d'image placé sur les lunettes de données est prévu comme moyen d'acquisition (2) et qu'un microphone (11) placé sur les lunettes de données est prévu pour l'acquisition de commandes vocales.

5. Procédé pour la transmission de premières données informationnelles au moyen d'un système à réalité amplifiée d'un utilisateur (7) se trouvant dans un premier lieu (O1) à un expert distant (22) se trouvant dans un deuxième lieu (O2), dans lequel
- à l'aide du système à réalité amplifiée, l'expert (22) est introduit virtuellement dans les événements se déroulant dans le premier lieu (O1),
- les données informationnelles sont des valeurs de processus, des valeurs de signaux, des images vidéo et/ou des signaux vocaux de l'utilisateur (7),
- l'expert distant (22) se trouvant dans le deuxième lieu (O2) transmet à l'utilisateur (7) se trouvant dans le premier lieu (O1) des deuxièmes données informationnelles (I11, I12) sous la forme d'informations à réalité amplifiée,
- les premières données informationnelles sont acquises par des moyens d'acquisition (2, 11) ayant un système de capteurs, notamment un dispositif d'enregistrement d'image, et les deuxièmes données informationnelles sont présentées à l'utilisateur (7) par des moyens de visualisation (4),
- les premières données informationnelles sont évaluées et des données d'objet mémorisées sont associées à des objets réels
- et les données d'objet associées sont automatiquement mises à disposition, en particulier à des fins de maintenance sur place.

6. Procédé selon la revendication 5,
**caractérisé par le fait que** les données informationnelles (I1 à In) sont des données informationnelles statiques et dynamiques.

7. Procédé selon l'une des revendications 5 ou 6,
**caractérisé par le fait que** les moyens d'acquisition (2) sont commandés par l'utilisateur et sont conçus comme des moyens d'acquisition à commande vocale ou comme des moyens d'acquisition commandés par des données de commande.

8. Procédé selon l'une des revendications 5 à 7,
**caractérisé par le fait que** les deuxièmes données informationnelles sont présentées par les moyens de visualisation (4) conçus comme des dispositifs d'affichage placés dans la zone des verres de lunettes de données, que les premières données informationnelles sont acquises par un dispositif d'enregistrement d'image placé sur les lunettes de données et que les commandes vocales sont acquises par un microphone placé sur les lunettes de données.
